(19) Europäisches Patentamt
European Patent Office
Office européen des brevets

(11) EP 0 930 332 B1

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(51) Int Cl.[7]: **C08K 5/3477**, C08K 3/22, C08K 3/32, C08K 3/26, C08K 7/00, C08K 5/3462, C08K 13/02, C08K 3/00

(21) Anmeldenummer: **98123454.5**

(22) Anmeldetag: **11.12.1998**

(54) **Stabilisatorsystem für chlorhaltige Polymere**

Stabiliser system for polymers containing chlorine

Système de stabilisateurs pour les polymères chlorés

(84) Benannte Vertragsstaaten:
**AT BE DE DK ES FI FR GB IT NL SE**

(30) Priorität: **16.01.1998 CH 7898**

(43) Veröffentlichungstag der Anmeldung:
**21.07.1999 Patentblatt 1999/29**

(73) Patentinhaber: **Crompton Vinyl Additives GmbH**
**68623 Lampertheim (DE)**

(72) Erfinder: **Wehner, Wolfgang, Dr.**
**64673 Zwingenberg (DE)**

(56) Entgegenhaltungen:
**EP-A- 0 354 179**
**EP-A- 0 768 336**
**WO-A-92/13914**
**DE-A- 4 425 275**
**DE-C- 3 941 902**
**US-A- 4 656 209**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 930 332 B1

Printed by Jouve, 75001 PARIS (FR)

## Beschreibung

Die Erfindung betrifft Stabilisatorkombinationen aus einer Verbindung der unten dargestellten Formel I und mindestens einem weiteren Stoff aus den Gruppen der Calcium-Aluminium-Hydroxide und/oder der Calcium-Aluminium-Hydroxo-Hydrogenphosphite und/oder Calcium-Aluminium-Hydroxo(Hydrogen)Carbonate sowie deren Hydrate und/oder der Aluminiumhydroxide und/oder Lithium-Schichtgitterverbindungen, die sich zum Stabilisieren von chlorhaltigen Polymeren, insbesondere PVC, eignen.

PVC kann durch eine Reihe von Zusatzstoffen stabilisiert werden. Verbindungen des Bleis, Bariums und Cadmiums sind dafür besonders gut geeignet, sind jedoch heute aus ökologischen Gründen oder wegen ihres Schwermetallgehalts umstritten (vgl. "Kunstoffadditive", R. Gächter/H. Müller, Carl Hanser Verlag, 3. Aufl., 1989, Seiten 303-311, und "Kunststoff Handbuch PVC", Band 2/1, W. Becker/D. Braun, Carl Hanser Verlag, 2. Aufl., 1985, Seiten 531-538; sowie Kirk-Othmer: "Encyclopedia of Chemical Technology", 4th Ed., 1994, Vol. 12, Heat Stabilizers, S. 1071-1091). Man sucht daher weiter nach wirksamen Stabilisatoren und Stabilisatorkombinationen, welche frei von Blei, Barium und Cadmium sind.

Verbindungen der Formel I sind bereits in DE-A-1 694 873, EP-A-0 065 934, EP-A-0 041 479 und EP-A-0 768 336 beschrieben worden, und können nach bekannten Methoden in einem oder mehreren Verfahrensschritt(en) hergestellt werden.

Die Stabilisierung von chlorhaltigen Polymeren, insbesondere PVC, mittels Hydrocalumiten, Katoiten und Calcium-Aluminium-Hydroxo-Hydrogenphosphiten ist bekannt aus WO 92/13914, WO 93/25613, DE 3 941 902 und DE 4 106 411.

Die stabilisierende Wirkung von Lithium-Schichtgitterverbindungen auf PVC ist beispielsweise in EP-A-0 761 756 und in DE-A-4 425 275 beschrieben. Eine stabilisierende Wirkung von titanhaltigen Hydrotalciten ist aus WO 95/21127 ersichtlich.

Es wurde nun gefunden, daß Stabilisatorkombinationen enthaltend

A) mindestens eine Verbindung der Formel I

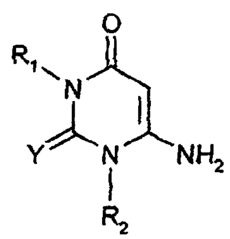

(I),

worin

$R_1$ und $R_2$ unabhängig voneinander für $C_1$-$C_{12}$-Alkyl, $C_3$-$C_6$-Alkenyl, unsubstituiertes oder mit 1 bis 3 $C_1$-$C_4$-Alkyl-, $C_1$-$C_4$-Alkoxy-, $C_5$-$C_8$-Cycloalkyloder mit Hydroxygruppen oder Cl-Atomen substituiertes $C_5$-$C_8$-Cycloalkyl, unsubstituiertes oder am Phenylring mit 1 bis 3 $C_1$-$C_4$-Alkyl-, $C_1$-$C_4$-Alkoxy-, $C_5$-$C_5$-$C_8$-Cycloalkyl- oder mit Hydroxygruppen oder Cl-Atomen substituiertes $C_7$-$C_9$-Phenylalkyl darstellen, und

$R_1$ oder $R_2$ zusätzlich für Wasserstoff stehen können, sowie

Y S oder O ist, und

B) mindestens eine Verbindung aus der Gruppe der Calcium-Aluminium-Hydroxide und/oder deren Hydrate und/oder

C) mindestens eine Verbindung aus der Gruppe der Calcium-Aluminium-Hydroxo- Hydrogenphosphite und/oder deren Hydrate und/oder

D) mindestens eine Verbindung aus der Gruppe der Aluminiumhydroxide und/oder deren Hydrate und/oder

E) mindestens eine Verbindung aus der Gruppe der Calcium-Aluminium-Hydroxo-(Hydrogen)Carbonate und/oder deren Hydrate und/oder

F) mindestens eine Verbindung aus der Gruppe der Lithium-Schichtgitterverbindungen und/oder deren Hydrate und/oder

G) mindestens eine Verbindung aus der Gruppe der titanhaltigen Hydrotalcite und/oder deren Hydrate

sich besonders gut zur Stabilisierung von beispielsweise PVC eignen.

Einen weiteren erfindungsgemässen Bestandteil bilden Kombinationen von A) und B), A) und C), A) und D), A) und E), A) und F), A) und B) und C) sowie A) und B) und C) und D) mit Perchloratverbindungen und/oder Polyolen und/oder Glycidylverbindungen.

Wobei für Verbindungen der Formel I gilt:

$C_1$-$C_4$-Alkyl bedeutet z. B. Methyl, Ethyl, n-Propyl, iso-Propyl, n-, i-, sec- oder t-Butyl.
$C_1$-$C_{12}$-Alkyl bedeutet z. B. ausser den soeben genannten Resten Pentyl, Hexyl, Heptyl, Octyl, 2-Ethylhexyl, i-Octyl, Decyl, Nonyl, Undecyl oder Dodecyl.
$C_1$-$C_4$-Alkoxy bedeutet z. B. Methoxy, Ethoxy, Propoxy, Isopropoxy, Butoxy oder Isobutoxy.
$C_5$-$C_8$-Cycloalkyl bedeutet z. B. Cyclopentyl, Cyclohexyl, Cycloheptyl oder Cyclooctyl.
Bei $C_7$-$C_9$-Phenylalkyl handelt es sich beispielsweise um Benzyl, 1- oder 2-Phenylethyl, 3-Phenylpropyl, $\alpha,\alpha$-Dimethylbenzyl oder 2-Phenylisopropyl, vorzugsweise um Benzyl.

Wenn die Cycloalkylgruppen oder die Phenylgruppe der Phenylalkylreste substituiert sind, dann bevorzugt mit zwei oder einem Substituenten, und von den Substituenten vor allem mit Chlor, Hydroxy, Methyl oder Methoxy.
$C_3$-$C_6$-Alkenyl bedeutet z. B. Vinyl, Allyl, Methallyl, 1-Butenyl oder 1-Hexenyl, vorzugsweise Allyl.

Bevorzugt sind dabei Verbindungen der Formel I, worin
$R_1$ und $R_2$ unabhängig voneinander für $C_1$-$C_4$-Alkyl und Wasserstoff stehen. Besonders bevorzugt sind entweder $R_1$ und $R_2$ gleich und bedeuten Methyl, Ethyl, Propyl, Butyl, oder Allyl, oder sie sind verschieden und bedeuten Ethyl und Allyl.

Die Verbindungen der Komponente A) sind zur Erzielung der Stabilisierung im chlorhaltigen Polymer zweckmäßig zu 0,01 bis 10 Gew.-%, vorzugsweise zu 0,05 bis 5 Gew.-%, insbesondere zu 0,1 bis 3 Gew.-% zu verwenden.

Die Verbindungen der unter B) genannten Gruppen sind allgemein in "Ullmann's Encyclopedia of Industrial Chemistry" (5. Auflage, 1986): Vol. A5-Cement and Concrete (S. 505 ff.); Kirk-Othmer "Encyclopedia of Chemical Technology" (4. Auflage, 1993): Vol. 5- Cement (S. 572 ff.); P. Barnes "Structure and Performance of Cements" (Appl. Sci. Publ. N. Y., 1983); F. M. Lea "The Chemistry of Cement and Concrete" (E. Arnold Publ. London, 1971); H. F. W. Taylor "Cement Chemistry" (Acad. Press, London, 1992) - Kap. 6: Hydrated aluminate phases (S. 167 ff.) beschrieben und werden wie folgt beispielhaft erläutert:

**Hydrocalumite**

Für die erfindungsgemässen Stabilisatorkombinationen geeignete Verbindungen aus der Gruppe der Hydrocalumite der allgemeinen Formel

$$Ca_xAl(OH)_{2x+3}\cdot mH_2O,$$

wobei
x = 1 - 4 und
m = 0 - 8 bedeuten,
können beispielsweise mittels einem Verfahren hergestellt werden, bei dem man Mischungen aus wasserlöslichen Calcium- und Aluminiumsalzen in zur Herstellung der erwünschten Verbindungen entsprechenden Mengen in wässrigem Medium mit einer Natriumhydroxidlösung versetzt, bis ein pH-Wert von etwa 10 erreicht ist. Hierbei bildet sich eine Suspension, von der das Reaktionsprodukt in an sich bekannter Weise abgetrennt und gewonnen wird, beispielsweise durch Filtrieren, Waschen und Trocknen. Bei einer bevorzugten Ausführungsform wird die Suspension vor ihrer Abtrennung mit einem bekannten Stabilisator-Coatungsmittel, beispielsweise Stearinsäure, versetzt. Dadurch wird die Dispergierbarkeit der in einer Stabilisatorkombination verwendeten Hydrocalumite in den halogenhaltigen thermoplastischen Harzen verbessert.
Bervorzugte Verbindungen sind solche, bei denen in der obigen allgmeinen Formel
x = 2 oder 3 ist.

**Katoite**

Für die erfindungsgemässen Stabilisatorkombinationen geeignete Verbindungen aus der Gruppe der Katoite der allgemeinen Formel

$$Ca_3Al_2(OH)_{12}\cdot mH_2O,$$

wobei

m = 0 - 10 bedeutet,

die gegebenenfalls oberflächenmodifiziert sein können, haben ein ganz bestimmtes Kristallgitter (sogenannte Hydrogranatstruktur), wodurch sie sich von anderen Calcium-Aluminium-Hydroxyverbindungen unterscheiden. Dieses Kristallgitter samt Gitterabständen wird in dem Artikel von C. Cohen-Addad et P. Ducros in Acta Cryst. (1967), 23, Seiten 220 bis 225 beschrieben. Demnach handelt es sich um ein kubisches Kristallgitter. Das Aluminium wird oktaedrisch umgeben von sechs Sauerstoffen, die je noch ein Wasserstoff tragen. Das Calcium ist von 8 Sauerstoffen umgeben, die einen gestörten Kubus bilden, der auch als triangularer Dodekaeder bezeichnet wird.

Die Katoite der allgemeinen Formel $Ca_3Al_2(OH)_{12}$ können beispielsweise in Anlehnung in die deutsche Patentschrift DE 2 424 763 aus den Hydroxiden des Calciums und Aluminiums in entsprechenden stöchiometrischen Mengen im wässrigen System hergestellt werden. Sie fallen je nach Versuchstemperaturen und Reaktionszeiten mit unterschiedlichen mittleren Teilchendurchmessern an.

Bevorzugt werden Temperaturen im Bereich von 50 bis 150°C und Reaktionszeiten von 0,1 bis 9 Stunden. Dabei fallen die Katoite mit mittleren Teilchendurchmessem von 0,1 bis 100 µm, vorzugsweise 0,5 bis 30 µm an.

Es kann vorkommen, dass als Nebenprodukt geringe Mengen an calciumhaltigen Hydroxyaluminaten (Hydrocalumite) anfallen, die eine Schichtstruktur aufweisen und durch die oben beschriebene allgemeine Formel wiedergegeben werden.

Bei der Herstellung der Katoite können auch Überschüsse von Aluminium- oder Calciumhydroxid eingesetzt werden, wobei Mischungen von nicht umgesetztem Calcium- und/oder Aluminiumhydroxid und Katoit entstehen. Diese Mischungen können ebenfalls im Sinne der Erfindung verwendet werden.

Falls gewünscht, können die Katoite der obigen Formel oberflächenmodifiziert sein mit einem oder mehreren Additiven ausgewählt aus den Gruppen

a) gegebenenfalls alkoxylierte Alkohole mit einer oder mehreren Hydroxylgruppen,
b) teilweise oder vollständig epoxidierte ungesättigte Fettsäuren, Fettalkohole und/oder deren Derivate,
c) Voll- und Partialester von Polyolen mit 3 bis 30 C-Atomen und 2 bis 6 Hydroxylgruppen mit Carbonsäuren mit 6 bis 22 C-Atomen,
d) Alkyl- und Arylphosphiten,
e) Homo- und Mischpolymeren von Acrylsäure und Methacrylsäure,
f) Lignin- und Naphthalinsulfonate und/oder Trimerfettsäuren,
g) Salze von Fettsäuren.

Als Additive kommen in der Gruppe a) sowohl monofunktionelle Alkohole als auch Polyole mit 3 bis 30 C-Atomen und 2 bis 6 Hydroxylgruppen in Betracht, die gegebenenfalls alkoxyliert, vorzugsweise ethoxyliert sein können. Aus der Gruppe der monofunktionellen Alkohole werden bevorzugt Fettalkohole mit 6 bis 22 C-Atomen eingesetzt wie Caprin-, Lauryl-, Palmityl-, Stearyl-, Oleyl-, Linolyl-, Arachidyl- und Behenylalkohol sowie ihre technischen Mischungen wie sie aus natürlichen Ölen und Fetten zugänglich sind. Ganz besonders bevorzugt werden von diesen Fettalkoholen die ethoxylierten Vertreter hiervon eingesetzt mit 2 bis 15 Mol Ethylenoxid. Aus der Gruppe der Polyole eignen sich Diole mit 3 bis 30 C-Atomen, wie Butandiole, Hexandiole, Dodecandiole, sowie Trimethylolpropan, Pentaerythrit, Glycerin und deren technische Oligomerengemische mit durchschnittlichen Kondensationsgraden von 2 bis 10. Ganz besonders bevorzugt werden aus der Gruppe der Polyole solche mit 3 bis 30 C-Atomen, die pro 3 C-Atomen mindestens eine Hydroxylgruppe oder einen Ethersauerstoff tragen, vorzugsweise Glycerin und/oder die technischen Oligoglyceringemische mit durchschnittlichen Kondenstionsgraden von 2 bis 10.

Bei den Additiven der Gruppe b) handelt es sich um teilweise oder vollständig epoxidierte ungesättigte Fettsäuren oder Fettalkohole mit 6 bis 22 C-Atomen oder Derivate hiervon. Als Derivate der epoxidierten Fettsäuren oder Fettalkoholen sind insbesondere die Ester hiervon geeignet, wobei die epoxidierten Fettsäuren und epoxidierten Fettalkohole miteinander verestert sein können oder aber auch mit nicht-epoxidierten Carbonsäuren oder mit nicht-epoxidierten ein- oder mehrwertigen Alkoholen. Die epoxidierten Fettsäuren leiten sich vorzugsweise von der ungesättigten Palmitolein-, Öl-, Elaidin-, Petroselin-, Ricinol-, Linolen-, Gadolein-, oder Erucasäure ab, die nach bekannten Verfahren ganz oder teilweise epoxidiert werden. Die epoxidierten Fettalkohole leiten sich vorzugsweise ab von den ungesättigten Alkoholen Oleyl-, Elaidyl-, Ricinol-, Linoleyl-, Linolenyl-, Gadoleyl-, Arachidon- oder Erucaalkohol ab, die ebenfalls nach bekannten Verfahren ganz oder teilweise epoxidiert werden. Geeignete Ester von epoxidierten Fettsäuren sind Ester von ein-, zwei- und/oder dreiwertigen Alkoholen, die vollständig mit epoxidierten, ungesättigten Carbonsäuren mit 6 bis 22 C-Atomen verestert sind wie Methyl-, 2-Ethylhexyl-, Ethylenglykol-, Butandiol-, Neopentylglykol-, Glycerin- und/oder Trimethylolpropanester von epoxidierter Lauroleinsäure, Palmitoleinsäure, Ölsäure, Ricinolsäure, Linolsäure und/oder Linolensäure. Bevorzugt werden Ester von dreiwertigen Alkoholen und praktisch vollständig epoxidierten ungesättigten Carbonsäuren mit 12 bis 22 C-Atomen, und insbesondere Ester von Glycerin mit praktisch vollständig epoxidierten ungesättigten Carbonsäuren mit 12 bis
22 C-Atomen. Wie in der Fettchemie üblich, können die epoxidierten Carbonsäureglyceride auch technische Gemische

darstellen, wie man sie durch Epoxidation von natürlichen ungesättigten Fetten und ungesättigten Ölen erhält. Vorzugsweise wird epoxidiertes Rüböl, epoxidiertes Sojaöl und epoxidiertes Sonnenblumenöl neuer Züchtung eingesetzt.

Bei den Additiven der Gruppe c) handelt es sich um Voll- oder Partialester, die nach den einschlägigen Methoden der präparativen organischen Chemie, beispielsweise durch säurekatalysierte Umsetzung von Polyolen mit Carbonsäuren erhalten werden. Als Polyolkomponente kommen dabei solche in Betracht, die bereits in Zusammenhang mit der Gruppe a) besprochen wurden. Als Säurekomponente werden bevorzugt aliphatische, gesättigte und/oder ungesättigte Carbonsäuren mit 6 bis 22 C-Atomen wie Capronsäure, Caprylsäure, Caprinsäure, Laurinsäure, Myrisitinsäure, Palmitinsäure, Palmitoleinsäure, Stearinsäure, Ölsäure, Ricinolsäure, Linolsäure, Linolensäure, Behensäure oder Erucasäure eingesetzt. Wie in der Fettchemie üblich, kann die Carbonsäure auch ein technisches Gemisch darstellen, wie es bei der Druckspaltung von natürlichen Fetten und Ölen anfällt. Bevorzugt werden Partialester von Glycerin und insbesondere von deren technischen Oligoglyceringemischen mit durchschnittlichen Kondensationsgraden von 2 bis 10 mit gesättigten und/oder ungesättigten aliphatischen Carbonsäuren mit 6 bis 22 C-Atomen.

Schliesslich können gemäss Gruppe d) Alkyl- und Arylphosphite eingesetzt werden, vorzugsweise solche der allgemeinen Formel

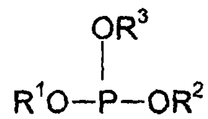

in der $R^1$, $R^2$ und $R^3$ unabhängig voneinander für einen Alkylrest mit 1 bis 18 Kohlenstoffatomen oder einen Phenylrest stehen. Typische Beispiele für Additive der Gruppe d) sind Tributylphosphit, Triphenylphosphit, Dimethylphenylphosphit und/oder Dimethylstearylphosphit. Bevorzugt wird Diphenyldecylphosphit.

Bei den Additiven aus der Gruppe e) handelt es sich bevorzugt um Polymere von Acrylsäure und Methacrylsäure sowie deren Copolymeren. Der Begriff der Copolymere wird in doppeltem Sinne verstanden: einmal als reine Copolymere von Acrylsäure und Methacrylsäure und zum anderen als Copolymere von (Meth)Acrylsäure mit weiteren vinylisch ungesättigten, zur Polymerisation fähigen Monomeren. Beispiele für weitere zur Polymerisation fähige Monomere sind sulfon- und phosphonsäuregruppenhaltige ungesättigte Monomere, ungesättigte aliphatische Carbonsäuren mit 3 bis 5 C-Atomen, Amide von ungesättigten aliphatischen Carbonsäuren mit 3 bis 5 C-Atomen, aminogruppenhaltige ungesättigte Monomere und/oder deren Salze, Vinylacetat, Acrolein, Vinylchlorid, Acrylnitril, Vinylidenchlorid, 1,3-Butadien, Styrol, Alkylstyrole mit 1 bis 4 C-Atomen im Alkylrest. Beispiele für Additive der Gruppe e) sind Polyacrylsäure, Polymethacrylsäure - im folgenden werden Acrylsäure und Methacrylsäure sowie deren Derivate vereinfacht als (Meth)acrylsäure bzw. Derivate abgekürzt - und/oder deren Salze wie Polynatrium(meth)acrylat, Copolymere von (Meth)acrylsäure mit Maleinsäure, Maleinsäureanhydrid, Styrolsulfonsäure, α-Methylstyrol, 2-Vinylpyridin, 1-Vinylimidazol, Dimethylaminopropyl(meth)acrylamid, 2-(meth)acrylamido-2-methylpropansulfonsäure, (Meth)acrylamid, N-Hydroxydimethyl(meth)acrylamid und/oder deren Salze. Ganz besonders bevorzugt unter den polymeren Additiven sind solche, die einen überwiegend anionischen Charakter aufweisen, das heisst, die mehrheitlich Säuregruppen frei oder in Form ihrer Salze tragen. Insbesondere bevorzugt sind Polymere von (Meth)acrylsäure sowie deren Copolymerisate mit Styrol, Acrolein, Alkylstyrolen mit 1 bis 4 C-Atomen im Alkylrest, Styrolsulfonsäure, Maleinsäure und/oder deren Salze, insbesondere deren Natriumsalze und Maleinsäureanhydrid. Zweckmässigerweise besitzen die polymeren Additive der Gruppe e) ein Molekulargewicht von 1000 bis 10000. Die Herstellung der polymeren Additive kann nach bekannten Verfahren wie Substanz- oder Lösungsmittelpolymerisation erfolgen (vergleiche dazu Ullmann's Encyclopädie der technischen Chemie, Band 19, 4. Auflage, Seiten 2 - 11, 1980).

Die den Additiven der Gruppe g) handelt es sich um Salze von Fettsäuren. Geeignete Fettsäuren wurden bereits im Zusammenhang mit Additiven der Gruppe c) aufgezählt. Bevorzugt werden hier die Alkalisalze der gesättigten Fettsäuren.

Ein oder mehrere Additive aus einer oder mehreren der Gruppen a) bis g) können zur Modifizierung der Katoite eingesetzt werden, wobei die Gesamtmenge an Additiven in dem Bereich von 0,1 bis 10 Gew% - bezogen auf Katoit - liegt. Bei Kombinationen der polymeren Additive e) mit weiteren Additiven aus den Gruppen a) bis d) und f) und g) ist es bevorzugt, die Additive in Mengen von 50 bis 90 Gew% - bezogen auf die Gesamtadditivmenge - zu haben. Besonders bevorzugt werden von den oberflächenmodifizierten Katoiten solche, die mit einem oder mehreren Additiven aus den Gruppen b), e) und g) modifiziert sind.

Die Modifizierung der Katoite kann entweder in situ oder nachträglich erfolgen.

Bei der nachträglichen Modifizierung werden die Katoite mit organischen oder wässrigen Lösungen der Additive innigst vermahlen, vorzugsweise mit Mahlkörpermühlen und insbesondere mit einer Kugelmühle und anschliessend gewöhnlich getrocknet. Sofern es sich bei den Additiven um bei Raumtemperatur flüssige oder niedrigschmelzende Produkte handelt, muss man natürlich keine Lösungen davon verwenden. Ansonsten verwendet man bei den Additiven a) bis g) am liebsten klare wässrige Lösungen oder Lösungen mit polaren organischen Lösungsmitteln.

Der Begriff der polaren organischen Lösungsmittel umfasst bei Raumtemperatur (15 bis 25°C) flüssige Kohlenwasserstoffverbindungen, die mindestens eine elektronegativeren Substituenten als Kohlenstoff tragen. Dazu zählen Chlorkohlenwasserstoffe, Alkohole, Ketone, Ester, Ether und/oder Glykolether. Geeignete polare organische Lösungsmittel sind Methanol, Ethanol, n-Butanol, Aceton, Methylethylketon, Methylisobutylketon, Cyclohexanol, Isophoron, Ethylacetat, Milchsäureethylester, 2-Methoxyethylacetat, Tetrahydrofuran, Ethylglykolmonomethylether, Diethylenglykolmonoethylether.

Damit die Oberfläche der Katoite gleichmässig modifiziert werden kann, ist es bei Anwesenheit der Additive der Gruppe e) zweckmässig, wenn diese löslich sind in polaren organischen Lösungsmitteln der beschriebenen Art und/oder Wasser mit

pH-Werten von 8 bis 12. Der Begriff löslich bedeutet in diesem Zusammenhang, dass die polymeren Additive e) in den polaren organischen Lösungsmitteln und in einer wässrigen Lösung mit pH 10, eingestellt mit Alkalihydroxiden bei 20°C, zu mindestens 0,01 Gew.-%, vorzugsweise 0,1 Gew.-% - bezogen auf die Lösung - und insbesondere unter den angegebenen Bedingungen vollständig klar gelöst sind.

Die Modifizierung kann auch in situ erfolgen, das heisst, man kann bereits den Calcium- und Aluminiumhydroxid-Lösungen, aus dem sich der Katoit bildet, die Additive gegebenenfalls in Form ihrer Lösungen zusetzen.

Letztendlich kann man aber auch beide Modifizierungsarten kombinieren, was sich für die Modifizierung mit mehreren Additiven empfiehlt, die insbesondere unterschiedliches Lösungsverhalten zeigen.

Die Verbindungen der unter C) genannten Gruppe werden wie folgt erläutert:

**Calcium-Aluminium-Hydroxo-Hydrogenphosphite**

Für die erfindungsgemässen Stabilisatorkombinationen geeignete Verbindungen aus der Gruppe der basischen Calcium-Aluminium-Hydroxy-Hydrogenphosphite der allgemeinen Formel

$$Ca_xAl_2(OH)_{2(x+2)}HPO_3 \cdot mH_2O,$$

wobei
 $x = 2 - 8$ und
 $m = 0 - 12$ bedeuten, oder

$$Ca_xAl_2(OH)_{2(x+3-y)}(HPO_3)_y \cdot mH_2O,$$

wobei
 $x = 2 - 12$,

$$\frac{2x+5}{2} > y > 0 \text{ und}$$

 $m = 0 - 12$ bedeuten,
 ausgenommen $y = 1$, wenn $x = 2 - 8$ ist,

können beispielsweise mittels einem Verfahren hergestellt werden, bei dem man Mischungen aus Calciumhydroxid und/oder Calciumoxid, Aluminiumhydroxid und Natriumhydroxid oder aus Calciumhydroxid und/oder Calciumoxid und Natriumaluminat mit phosphoriger Säure in zur Herstellung der erwünschten Calcium-Aluminium-Hydroxy-Hydrogenphosphite entsprechenden Mengen in wässrigem Medium umsetzt und das Reaktionsprodukt in an sich bekannter Weise abtrennt und gewinnt. Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit Wasser und Trocknen des gewaschenen Rückstands bei Temperaturen von beispielsweise 60 - 130°C, vorzugsweise bei 90 - 120°C.

Für die Umsetzung kann sowohl feinteiliges, aktives Aluminiumhydroxid in Kombination mit Natriumhydroxid als auch ein Natriumaluminat eingesetzt werden. Calcium kann in Form von feinteiligem Calciumoxid oder Calciumhydroxid oder Mischungen daraus verwendet werden. Die phosphorige Säure kann in unterschiedlicher konzentrierter Form eingesetzt werden.

Die Umsetzungstemperaturen liegen vorzugsweise zwischen 50 und 100°C, weiter vorzugsweise zwischen etwa 60

und 85°C. Katalysatoren oder Beschleuniger sind nicht erforderlich, stören aber auch nicht. Bei den Verbindungen kann das Kristallwasser ganz oder teilweise durch thermische Behandlung entfernt werden.
Bei ihrer Anwendung als Stabilisatoren spalten die getrockneten Calcium-Aluminium-Hydroxy-Phosphite bei den beispielsweise für Hart-PVC üblichen Verarbeitungstemperaturen von 160 - 200°C kein Wasser ab, so dass in den Formteilen keine störende Blasenbildung auftritt.
Zur Verbesserung ihrer Dispergierbarkeit in halogenhaltigen thermoplastischen Harzen können die Verbindungen in bekannter Weise mit oberflächenaktiven Mittel gecoatet werden.
Die Verbindungen der unter D) genannten Gruppe werden wie folgt erläutert:

**Aluminiumhydroxid**

Aluminiumtrihydroxid $Al(OH)_3$ ist dem Fachmann seit langem bekannt und kommt in der Natur kristallisiert als Hydrargillit und - verunreinigt mit AlO(OH), Eisenhydroxiden, Tonmineralien, Titandioxid - als Bauxit vor. Die Reindarstellung von amphoterem $Al(OH)_3$ wird unter anderem beschrieben im Lehrbuch der Anorganischen Chemie (Holleman-Wiberg), Walter de Gruyter Verlag, 101. Auflage, 1995, Seite 1077. Monoklines γ-Aluminiumtrihydroxid γ-Al $(OH)_3$ (Hydrargillit, Gibbsit) [auch mineralisch in der Natur vorkommend (z. B. als Scarbroit, Nordstrandit oder Tucanit)] erhält man bei langsamer Abscheidung aus Aluminatlösungen bei Raumtemperatur, während man hexagonales α-Aluminiumtrihydroxid α-$Al(OH)_3$ (Bayerit) als metastabile Modifikation bei schneller Fällung erhält. Letztere wandelt sich von selbst langsam in die energieärmere Form des Hydrargillits um. Bei der Fällung aus Aluminiumsalzlösungen z. B. mit Ammoniak entstehen zunächst amorphe Aluminiumhydroxide von wechselndem Wassergehalt, die sich anschliessend bei Raumtemperatur langsam über α-$Al(OH)_3$ in das γ-$Al(OH)_3$ umwandeln. Kristallisiertes $Al(OH)_3$ besitzt eine Schichtstruktur, bei der jedes Al-Atom oktaedrisch von sechs OH-Gruppen umgeben ist und jede OH-Gruppe gleichzeitig zwei Al-Atomen angehört. Somit liegen kantenverknüpfte $Al(OH)_6$-Oktaeder vor.
Die α-$Al(OH)_3$ -Struktur lässt sich wie folgt beschreiben: In einer hexagonaldichtesten Packung von $OH^-$-Ionen ist jede übernächste Schicht zu 2/3 mit $Al^{3+}$-Ionen besetzt. Die γ-$Al(OH)_3$-Struktur baut sich aus entsprechenden Schichten kantenverknüpfter $Al(OH)_6$-Oktaeder auf; die Schichten liegen aber nicht wie in α-$Al(OH)_3$ so übereinander, dass die OH-Gruppen einer Schicht in den Mulden, sondern über den OH-Gruppen der nächsten Schicht liegen (zwischen den Schichten befinden sich in α-$Al(OH)_3$ demgemäss oktaedrische, in γ-$Al(OH)_3$ trigonal-prismatische Lücken). Zur technischen Darstellung nach dem Bayer-Prozess und der Verwendung von Aluminiumtrihydroxid $Al(OH)_3$ siehe Seite 1078 im "Holleman-Wiberg".
Aluminiumoxidhydroxid AlO(OH) findet sich in der Natur in Form von Diaspor [α-AlO(OH)], Böhmit [γ-AlO(OH)] und - verunreinigt mit $Al(OH)_3$, Eisenhydroxiden, Aluminosilicaten, Titandioxiden u. a. mehr - im Bauxit. Zur künstlichen Darstellung von Aluminiumoxidhydroxid AlO(OH) und der Struktur von α-AlO(OH) und γ-AlO(OH) siehe Seiten 1080 und 1081 im "Holleman-Wiberg". Sämtliche Aluminiumhydroxide können auch in hydratisierter Form eingesetzt werden.
Die Herstellung von Calcium-Aluminium-Hydroxo-(Hydrogen)Carbonaten ist publiziert in R. Fischer et al., "Cement and Concrete Research" (CCR), 12, 517 (1989), die Synthese von Lithium-Schichgitterverbindungen ist beispielsweise beschrieben in EP-A-0 761 756 und DE-A-4 425 275.

F) Lithium-Schichtgitterverbindungen

Lithium-Aluminium-Schichtgitterverbindungen haben die allgemeine Formel A

$$Li_aM^{II}_{(b-2a)}Al_{(2+a)}OH_{(4+2b)}A^{n-}_{2/n}\cdot mH_2O$$

worin

$M^{II}$ Mg, Ca oder Zn und
$A^{n-}$ ein ausgewähltes Anion der Wertigkeit n oder ein Gemisch von Anionen ist und die Indizes im Bereich von

$$0 < a < (b-2)/2,$$

$$1 < b < 6$$

und
m = 0 bis 30

liegen mit der Einschränkung, dass b-2a > 2 ist oder
die allgemeine Formel B

$$[Al_2(Li_{(1-x)} \cdot M^{II}_x)(OH)_6]_n(A^{n-})_{1+x} \cdot mH_2O$$

worin
$M^{II}$, A, m und n die obige Bedeutung haben und
x die Bedingung erfüllt $0,01 \leq x < 1$.

Die Herstellung der genannten Schichtgitterverbindungen ist dadurch gekennzeichnet, dass man im wässrigen Medium Lithiumhydroxid, -oxid und/oder dessen in Hydroxid umwandelbare Verbindungen, Metall-(II)-hydroxide, -oxide und/oder deren in Hydroxide umwandelbare Verbindungen der genannten Metalle und Aluminiumhydroxide und/oder deren in Hydroxide umwandelbare Verbindungen sowie Säuren und/oder deren Salze bzw. Gemische davon bei einem pH-Wert von 8 bis 10 und bei Temperaturen von 20 bis 250°C miteinander umsetzt und das erhaltene feste Reaktionsprodukt abtrennt.
Die Reaktionszeit beträgt vorzugsweise 0,5 bis 40 Stunden, insbesondere 3 bis 15 Stunden.
Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit Wasser und Trocknen des gewaschenen Rückstands bei Temperaturen von beispielsweise 60 bis 150°C, vorzugsweise bei 90 bis 120°C.
Für die Umsetzung mit Aluminium kann sowohl feinteiliges, aktives Metall-(III)-hydroxid in Kombination mit Natriumhydroxid, als auch ein $NaAlO_2$ eingesetzt werden. Lithium bzw. eine der genannten Metall-(II)-Verbindungen kann in Form von feinteiligem Lithiumoxid oder -hydroxid oder Mischungen daraus bzw. von feinteiligem Metall-(II)-oxid oder -hydroxid oder Mischungen daraus verwendet werden. Die entsprechenden Säureanionen können in unterschiedlich konzentrierter Form z B. direkt als Säure oder aber als Salz eingesetzt werden.
Die Umsetzungstemperaturen liegen vorzugsweise zwischen etwa 20 und 250°C, weiter im besonderen zwischen etwa 60 und 180°C. Katalysatoren oder Beschleuniger sind nicht erforderlich. Bei den Substanzen kann das Kristallwasser ganz oder teilweise durch thermische Behandlung entfernt werden.
Bei ihrer Anwendung als Stabilisatoren spalten die getrockneten Schichtgitterverbindungen bei den für PVC üblichen Verarbeitungstemperaturen von 160 bis 220°C kein Wasser oder ein anderes Gas ab, so dass in den Formteilen keine störende Blasenbildung auftritt.
Das Anion A" in der obigen allgemeinen Formel kann Sulfat, Sulfit, Sulfid, Thiosulfat, Peroxid, Peroxosulfat, Peroxodisulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxid, Hydroxylamin, Hydroazid, Acetylacetonat, Phenolat, Pseudohalognide, Halogenite, Halogenate, Perhalogenate, $I_3^-$, Permanganat, Dianionen von Dicarbonsäuren wie Phthalat, Oxalat, Maleat oder Fumarat, Bisphenolate, Phosphat, Pyrophosphat, Phosphit, Pyrophosphit Trianionen von Tricarbonsäuren wie Citrat, Trisphenolate u. v. m. sowie Gemische daraus sein. Unter diesen sind Hydroxid, Carbonat, Phosphit und Maleat bevorzugt. Zur Verbesserung der Dispergierbarkeit der Substanzen in halogenhaltigen thermoplastischen Polymermassen können dieselben mit einer höheren Fettsäure, z. B. Stearinsäure, einem anionischen oberflächenaktiven Agens, einem Silankuppler, einem Titanat-Kuppler oder einem Glycerinfettsäureester oberflächenbehandelt sein.

G) Titanhaltige Hydrotalcite

Titanhaltige Hydrotalcite sind in WO 95/21127 beschrieben. Verbindungen dieser Art mit der allgemeinen Formel $Al_aMg_bTi_c(OH)_d(CO_3)_e \cdot mH_2O$, wobei a:b = 1:1 bis 1:10; $2 \leq b \leq 10$; $0<c<5$; $0 \leq m<5$ betragen und d und e so gewählt sind, daß ein basisches, ladungsfreies Molekül entsteht, können ebenfalls mit verwendet werden.

Die oben beschriebenen Calcium-Aluminium-Hydroxide, Calcium-Aluminium-Hydroxo-Hydrogenphosphite, Aluminiumhydroxide, Calcium-Aluminium-Hydroxo(Hydrogen)Carbonate, Lithium-Schichtgitterverbindungen und titanhaltige Hydrotalacite können ausser kristallin auch teilkristallin und/oder amorph vorliegen.
Die Verbindungen des Typs B bis F können in einer Menge von beispielsweise 0,05 bis 10 Gew.-Teilen, zweckmäßig von 0,1 bis 10 Gew.-Teilen und insbesondere von 0,5 bis 10 Gew.-Teilen bezogen auf 100 Gew.-Teile PVC eingesetzt werden.
Erfindungsgemäß ist weiterhin die Abmischung von beliebigen Kombinationen aus A bis F mit Polyolen und Disaccharidalkoholen und/oder Perchloratverbindungen und/oder Glycidylverbindungen.

Polyole und Disaccharidalkohole

Als Verbindungen dieses Typs kommen beispielsweise in Betracht:
Pentaerythrit, Dipentaerythrit, Tripentaerythrit, Trimethylolethan, Bistrimethylolpropan, Inosit (Cyclite), Polyvinylalkohol, Bistrimethylolethan, Trimethylolpropan, Sorbit (Hexite), Maltit, Isomaltit, Cellobiit, Lactit, Lycasin, Mannit, Lactose, Leucrose, Tris-(hydroxyethyl)-isocyanurat, Tris-(hydroxypropyl)-isocyanurat, Palatinit, Tetramethylolcyclohexanol, Tetramethylolcyclopentanol, Tetramethylolcyclopyranol, Xylit, Arabinit (Pentite), Tetrite, Glycerin, Diglycerin, Polyglycerin, Thiodiglycerin oder 1-0-$\alpha$-D-Glycopyranosyl-D-mannit-dihydrat. Bevorzugt sind davon die Disaccharidalkohole.
Verwendung finden können auch Polyolsirupe, wie Sorbit-, Mannit- und Maltitsirup.
Die Polyole können in einer Menge von beispielsweise 0,01 bis 20, zweckmäßig von 0,1 bis 20 und insbesondere von 0,1 bis 10 Gew.-Teilen bezogen auf 100 Gew.-Teile PVC, angewandt werden.

Perchlorat-Verbindungen

Beispiele sind diejenigen der Formel $M(ClO_4)_n$, wobei M für Li, Na, K, Mg, Ca, Sr, Ba, Zn, Al, La oder Ce steht. Der Index n ist entsprechend der Wertigkeit von M 1, 2 oder 3. Die Perchloratsalze können mit Alkoholen (Polyolen,Cyclodextrinen), oder Ätheralkoholen bzw. Esteralkoholen komplexiert oder gelöst sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglycole, sowie Di-, Tri- und Tetrapentaerythrit oder Polyvinylalkohol in verschiedenen Polymerisationsgraden.
Als weitere Lösungsmittel kommen Phosphatester sowie cyclische und acyclische Kohlensäureester in Frage.
Die Perchloratsalze können dabei in verschiedenen gängigen Darreichungsformen eingesetzt werden; z. B als Salz oder Lösung in Wasser oder einem organischen Solvens als solches, bzw. aufgezogen auf ein Trägermaterial wie PVC, Ca-Silikat, Zeolithe oder Hydrotalcite, oder eingebunden durch chemische Reaktion in einen Hydrotalcit oder eine andere Schichtgitterverbindung. Als Polyolpartialether sind Glycerinmonoether und Glycerinmonothioether bevorzugt.
Weitere Ausführungsformen werden beschrieben in EP 0 394 547, EP 0 457 471 und WO 94/24200.
Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

Glycidylverbindungen

Sie enthalten die Glycidylgruppe , wobei diese direkt an Kohlenstoff, Sauerstoff-, Stickstoff- oder Schwefelatome gebunden ist, und worin entweder $R_1$ und $R_3$ beide Wasserstoff sind, $R_2$ Wasserstoff oder Methyl und n = 0 ist, oder worin $R_1$ und $R_3$ zusammen $-CH_2-CH_2-$ oder $-CH_2-CH_2-CH_2-$ bedeuten, R2 dann Wasserstoff und n = 0 oder 1 ist.

I) Glycidyl- und b-Methylglycidylester erhältlich durch Umsetzung einer Verbindung mit mindestens einer Carboxylgruppe im Molekül und Epichlorhydrin bzw. Glycerindichlorhydrin bzw. b-Methyl-epichlorhydrin. Die Umsetzung erfolgt zweckmäßig in Gegenwart von Basen.
Als Verbindungen mit mindestens einer Carboxylgruppe im Molekül können aliphatische Carbonsäuren verwandt werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.
Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure. Weiterhin können aromatische Carbonsäuren Verwendung finden, wie beispielsweise Benzoesäure, Phthalsäure, Isophthalsäure, Trimellithsäure oder Pyromellithsäure.
Ebenfalls können auch carboxylterminierte Addukte, z. B. von Trimellithsäure und Polyolen, wie beispielsweise Glycerin oder 2,2-Bis-(4-hydroxycyclohexyl)-propan verwandt werden.
Weitere im Rahmen dieser Erfindung verwendbare Epoxidverbindungen finden sich in der EP0506617.
II) Glycidyl- oder (b-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.
Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin,

1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$-Alkanolgemischen.
Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
Die Epoxidverbindungen können sich auch von einkernigen Phenolen ableiten, wie beispielsweise von Phenol, Resorcin oder Hydrochinon; oder sie basieren auf mehrkemigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.
III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-,N,N',N"-Tri- und N,N',N",N"'-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.
IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.
V) Epoxidverbindungen mit einem Rest der Formel I, worin $R_1$ und $R_3$ zusammen -CH2-CH2- bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel I, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:

a) flüssige Bisphenol-A-diglycidylether wie Araldit®GY 240, Araldit®GY 250, Araldit®GY 260, Araldit®GY 266, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®PY 302, Araldit®PY 306;
d) feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h) flüssige Glycidylether von Carbonsäuren wie Shell®Cardura E Terephthalsäureester, Tri mellithsäureester, Araldit®PY 284;
i) feste heterocyclische Epoxidharze (Triglycidylisocyanurat) wie Araldit® PT 810;
j) flüssige cycloaliphatische Epoxidharze wie Araldit®CY 179;
k) flüssige N,N,O-Triglycidylether von p-Aminophenol wie Araldit®MY 0510;
l) Tetraglycidyl-4-4'-methylenbenzamin oder N,N,N',N'-Tetraglycidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.
Vorwiegend werden Epoxidverbindungen, vor allem Diglycidylverbindungen, mit aromatischen Gruppen eingesetzt. Gegebenenfalls kann auch ein Gemisch verschiedener Epoxidverbindungen eingesetzt werden.
Besonders bevorzugt sind als endständige Epoxidverbindungen Diglycidylether auf der Basis von Bisphenolen, wie beispielsweise von 2,2-Bis-(4-hydroxyphenyl)-propan (BisphenolA), Bis-(4-hydroxyphenyl)-methan oder Mischungen

von Bis-(ortho/para-hydroxyphenyl)-methan (BisphenolF).
Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

Die erfindungsgemässen Zusammensetzungen können auch mit weiteren üblichen Zusatzstoffen versetzt sein, wie etwa Stabilisierungs-, Hilfs- und Verarbeitungsmitteln, z. B. Alkali- und Erdalkaliverbindungen, Gleitmitteln, Weichmachern, Pigmenten, Füllstoffen, Phosphiten, Thiophosphiten und Thiophosphaten, Mercaptocarbonsäureestern, epoxidierten Fettsäureestern, Antioxidantien, UV-Absorbern und Lichtschutzmitteln, optischen Aufhellern, Schlagzähmodifikatoren und Verarbeitungshilfen, Geliermitteln, Antistatika, Bioziden, Metalldesaktivatoren, Flammschutz- und Treibmitteln, Antifogagents, Kompatibilisatoren sowie Antiplateoutagents. (Vgl. "Handbook of PVC-Formulating" von E. J. Wickson, John Wiley & Sons, New York 1993). Es folgen Beispiele für derartige Zusatzstoffe:

**I. Füllstoffe:** Füllstoffe (HANDBOOK OF PVC FORMULATING E. J. Wickson, John Wiley & Sons, Inc., 1993, SS. 393 - 449) und Verstärkungsmittel (TASCHENBUCH der KA'e R. Gächter & H. Müller, Carl Hanser, 1990, SS. 549 - 615) beispielsweise Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide, oder Metallhydroxide, Ruß, Graphit, Gesteinsmehl, Schwerspat, Glasfasern, Talk, Kaolin und Kreide. Bevorzugt ist Kreide. Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

**II. Metallseifen:** Metallseifen sind in der Hauptsache Metallcarboxylate bevorzugt längerkettiger Carbonsäuren. Geläufige Beispiele sind Stearate und Laurate, auch Oleate und Salze kürzerkettiger Alkancarbonsäuren. Als Metallseifen sollen auch Alkylbenzoesäuren gelten. Als Metalle seien genannt: Li, Na, K, Mg, Ca, Sr, Ba, Zn, Al, La, Ce und Seltenerdenmetalle. Oft verwendet man sog. synergistische Mischungen wie Barium/Zink-, Magnesium/Zink- , Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, $5^{th}$ Ed., Vol. A16 (1985), S. 361 ff.). Zweckmäßig verwendet man organische Metallseifen aus der Reihe der aliphatischen gesättigten $C_2$-$C_{22}$-Carboxylate, der aliphatischen ungesättigten C3-C22-Carboxylate, der aliphatischen $C_2$-$C_{22}$-Carboxylate, die mit wenigstens einer OH-Gruppe substituiert sind, der cyclischen und bicyclischen Carboxylate mit 5 - 22 C-Atomen, der unsubstituierten, mit wenigstens einer OH-Gruppe substituierten und/oder $C_1$-$C_{16}$-alkylsubstituierten Benzolcarboxylate, der unsubstituierten, mit wenigstens einer OH-Gruppe substituierten und/oder $C_1$-$C_{16}$-alkylsubstituierten Naphthalincarboxylate, der Phenyl-$C_1$-$C_{16}$-alkylcarboxylate, der Naphthyl-$C_1$-$C_{16}$-alkylcarboxylate oder der gegebenenfalls mit $C_1$-$C_{12}$-Alkyl substituierten Phenolate, Tallate und Resinate.
Namentlich zu erwähnen sind, als Beispiele, die Zink-, Calcium-, Magnesiumoder Bariumsalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, N,N,-Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Calcium-, Magnesium- und Zinksalze der Monoester der divalenten Carbonsäuren, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure.
Bevorzugt sind Calcium-, Magnesium- und Zink-Carboxylate von Carbonsäuren mit 7 bis 18 C-Atomen (Metallseifen im engeren Sinn), wie beispielsweise Benzoate oder Alkanoate, bevorzugt Stearat, Oleat, Laurat, Palmitat, Behenat, Hydroxystearate, Dihydroxystearate oder 2-Ethylhexanoat. Besonders bevorzugt sind Stearat, Oleat und p-tert-Butylbenzoat. Auch überbasische Carboxylate wie überbasisches Zinkoctoat sind bevorzugt. Ebenfalls bevorzugt sind überbasische Calciumseifen.
Gegebenenfalls kann auch ein Gemisch von Carboxylaten unterschiedlicher Struktur eingesetzt werden.
Bevorzugt sind Zusammensetzungen, wie beschrieben, enthaltend eine organische Zink- oder/und Calciumverbindung.
Neben den genannten Verbindungen kommen auch organische Aluminium-Verbindungen in Frage, außerdem Verbindungen analog den oben erwähnten, insbesondere Aluminium-tri-stearat, Aluminium-di-stearat und Aluminium-monostearat, sowie Aluminiumacetat als auch davon abgeleitete basische Derivate. Zu den verwendbaren und bevorzugten Aluminium-Verbindungen finden sich weitere Erläuterungen in US 4,060,512 und US 3,243,394.

Neben den bereits genannten Verbindungen kommen femer auch organische Seltenerd-Verbindungen, insbesondere Verbindungen analog den oben erwähnten, in Frage. Unter dem Begriff Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere

mit Cer bevorzugt sind. Weitere bevorzugte Seltenerd-Verbindungen finden sich in der EP-A-0 108 023.

Gegebenenfalls kann ein Gemisch von Zink-, Alkali-, Erdalkali-, Aluminium-, Cer-, Lanthan- oder Lanthanoid-Verbindung unterschiedlicher Struktur eingesetzt werden. Auch können organische Zink-, Aluminium-, Cer-, Alkali-, Erdalkali-, Lanthan- oder Lanthanoid-Verbindungen auf eine Alumosalz-Verbindung gecoatet sein; siehe hierzu auch DE-A-4 031 818.

Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden. Gleiches gilt für die weiteren Metallstabilisatoren:

**III. Weitere Metallstabilisatoren:** Hier sind vor allem die Organozinnstabilisatoren zu nennen. Insbesondere kann es sich um Carboxylate, Mercaptide und Sulfide handeln. Beispiele geeigneter Verbindungen sind in US 4,743,640 beschrieben.

**IV. Alkali und Erdalkali-Verbindungen:** Darunter versteht man vornehmlich die Carboxylate der oben beschriebenen Säuren, aber auch entsprechende Oxide bzw. Hydroxide oder Carbonate. Es kommen auch deren Gemische mit organischen Säuren in Frage. Beispiele sind LiOH, NaOH, KOH, CaO, Ca(OH2), MgO, $Mg(OH)_2$, $Sr(OH)_2$, $Al(OH)_3$, $CaCO_3$ und $MgCO_3$ (auch basische Carbonate, wie beispielsweise Magnesia Alba und Huntit), sowie fettsaure Naund K-Salze. Bei Erdalkali- und Zn-Carboxylaten können auch deren Addukte mit MO oder $M(OH)_2$ (M = Ca, Mg, Sr oder Zn), sogenannte "overbased" Verbindungen, zum Einsatz kommen. Bevorzugt werden zusätzlich zur erfindungsgemäßen Stabilisatorkombination Alkali-, Erdalkali- und/oder Aluminiumcarboxylate eingesetzt.

**V. Gleitmittel:** Als Gleitmittel kommen beispielsweise in Betracht:

Montanwachs, Fettsäureester, PE-Wachse, Amidwachse, Chlorparaffine, Glycerinester oder Erdalkaliseifen. Verwendbare Gleitmittel sind auch in "Kunststoffadditive",

R. Gächter/H. Müller, Carl Hanser Verlag, 3. Aufl., 1989, Seiten 478 - 488 beschrieben. Zu erwähnen sind ferner Fettketone (wie in DE 4 204 887 beschrieben) sowie Gleitmittel auf Silikonbasis (wie in EP 0 225 261 beschrieben) oder Kombinationen davon, wie in EP 0 259 783 aufgeführt. Bevorzugt ist Calciumstearat. Die Gleitmittel können auch auf eine Alumosalz-Verbindung aufgebracht werden; siehe hierzu auch DE-A-4 031 818.

**VI. Weichmacher** Als organische Weichmacher kommen beispielsweise solche aus den folgenden Gruppen in Betracht:

A) Phthalsäureester: Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt sind Di-2-ethylhexyl-, Di-iso-nonyl- und Di-iso-decylphthalat, die auch unter den gebräuchlichen Abkürzungen DOP (Dioctylphthalat, Di-2-ethylhexyl-phthalat), DINP (Diisononylphthalat), DIDP (Diisodecylphthalat) bekannt sind.

B) Ester aliphatischer Dicarbonsäuren, insbesondere Ester von Adipin-, Azelain- und Sebazinsäure: Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Trimellithsäureester, beispielsweise Tri-2-ethylhexyltrimellithat, Tri-isodecyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).

D) Epoxyweichmacher: In der Hauptsache sind das epoxidierte ungesättigte Fettsäuren wie z. B. epoxidiertes Sojabohnenöl.

E) Polymerweichmacher: Eine Definition dieser Weichmacher und Beispiele für solche sind in "Kunststoffadditive", R. Gächter/H. Müller, Carl Hanser Verlag, 3. Aufl., 1989, Kapitel 5.9.6, Seiten 412 - 415, sowie in "PVC Technology ", W. V. Titow, 4th. Ed., Elsevier Publ., 1984, Seiten 165 - 170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.

F) Phosphorsäureester: Eine Definition dieser Ester ist im vorstehend genannten "Taschenbuch der Kunststoffadditive" Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexylphosphat sowie ®Reofos 50 und 95 (Ciba Spezialitätenchemie).

G) Chlorierte Kohlenwasserstoffe (Paraffine)

H) Kohlenwasserstoffe

I) Monoester, z. B. Butyloleat, Phenoxyethyloleat, Tetrahydrofurfuryloleat und Alkylsulfonsäureester.

J) Glykolester, z. B. Diglykolbenzoate.

Definitionen und Beispiele für Weichmacher der Gruppen G) bis J) sind den folgenden Handbüchern zu entnehmen: "Kunststoffadditive", R. Gächter/H. Müller, Carl Hanser Verlag, 3. Aufl., 1989, Kapitel 5.9.14.2, SS.422 - 425, (Gruppe G), und Kapitel 5.9.14.1, S. 422, (Gruppe H).
"PVC Technology", W. V. Titow, 4th. Ed., Elsevier Publishers, 1984, Kapitel 6.10.2, Seiten 171 - 173, (Gruppe G), Kapitel 6.10.5 Seite 174, (Gruppe H), Kapitel 6.10.3, Seite 173, (Gruppe I) und Kapitel 6.10.4, Seiten 173 - 174 (Gruppe J).
Es können auch Mischungen unterschiedlicher Weichmacher verwandt werden. Die Weichmacher können in einer Menge von beispielsweise 5 bis 20 Gew.-
Teilen, zweckmäßig 10 bis 20 Gew.-Teilen, bezogen auf 100 Gew.-Teile PVC, angewandt werden. Hart- bzw. Halbhart-PVC enthält bevorzugt bis zu 10 %, besonders bevorzugt bis zu 5 % oder keinen Weichmacher.

**VII. Pigmente:** Geeignete Stoffe sind dem Fachmann bekannt. Beispiele für anorganische Pigmente sind $TiO_2$, Pigmente auf Zirkonoxidbasis, $BaSO_4$, Zinkoxid (Zinkweiss) und Lithopone (Zinksulfid/Bariumsulfat), Ruß, Russ-Titandioxid-Mischungen, Eisenoxidpigmente, $Sb_2O_3$, $(Ti,Ba,Sb)O_2$, $Cr_2O_3$, Spinelle wie Cobaltblau und Cobaltgrün, Cd(S,Se), Ultramarinblau. Organische Pigmente sind z. B. Azopigmente, Phthalocyaninpigmente, Chinacridonpigmente, Perylenpigmente, Diketo-pyrrolopyrrolpigmente und Anthrachinonpigmente. Bevorzugt ist $TiO_2$ auch in mikronisierter Form. Eine Definition und weitere Beschreibungen finden sich im "Handbook of PVC Formulating", E. J.Wickson, John Wiley & Sons, New York, 1993.

**VIII. Phosphite (Phosphorigsäuretriester):** Beispiele sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit—diphosphit, Bis-(2,4-di-tert-butylphenyl)-pentaerythritdiphosphit, Bis-(2,6-di-tert—butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit—triphosphit, Bis-(2,4-di-tert-butyl-6-methylphenyl)-methylphosphit, Bis-(2,4-di-tert-butyl-6-methylphenyl)-ethylphosphit. Besonders geeignete sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z. B. Phenyldidecyl-, (2,4-Di-tert-butylphenyl)-didodecylphosphit, (2,6-Di-tert- butylphenyl)-di-dodecylphosphit und die Dialkylund Diaryl-pentaerythrit-diphosphite, wie Distearylpentaerythrit-diphosphit, sowie nichtstöchiometrische Triarylphosphite. z. B. der Zusammensetzung $(H_{19}C_9\text{-}C_6H_4)O_{1,5}P(OC_{12,13}H_{25,27})_{1,5}$ oder $(H_8C_{17}\text{-}C_6H_4)O_2P(i\text{-}C_8H_{17}O)$ oder $(H_{19}C_9\text{-}C_6H_4)O_{1,5}P(OC_{9,11}H_{19,23})_{1,5}$ oder

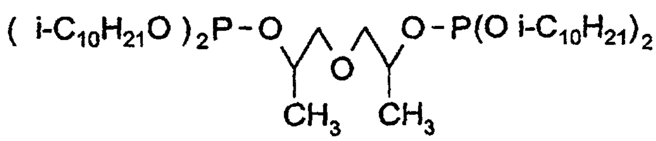

.

Bevorzugte organische Phosphite sind Distearyl-pentaerythrit-diphosphit, Trisnonylphenylphosphit und Phenyl-didecyl-phosphit. Als weiteres kommen Phosphorigsäurediester (mit o.g. Resten) sowie Phosphorigsäuremonoester (mit o.g. Resten) evtl. auch als Alkali-, Erdalkali-, Zink- oder Aluminiumsalz in Betracht. Diese Phosphorigsäureester können auch auf eine Alumosalz-Verbindung aufgebracht sein; siehe hierzu auch DE-A-4 031 818.
Die organischen Phosphite können in einer Menge von beispielsweise 0,01 bis 10, zweckmäßig 0,05 bis 5 und insbesondere 0,1 bis 3 Gew.-Teilen, bezogen auf
100 Gew.-Teile PVC, angewandt werden.

**IX. Thiophosphite und Thiophosphate:** Unter Thiophosphiten bzw.Thiophosphaten sind Verbindungen vom allgemeinen Typ: (RS)3P, $(RS)_3P{=}O$ bzw. $(RS)_3P{=}S$ zu verstehen, wie sie etwa in den Patentschriften DE 2 809 492, EP 0 090 770 und EP 0 573.394 beschrieben werden. Beispiele für diese Verbindungen sind: Trithiohexylphosphit, Trithiooctylphosphit, Trithiolaurylphosphit, Trithiobenzylphosphit, Trithiophosphorigesäure-tris-(carbo-i-octyloxy)-methyl-ester. Trithiophosphorigsäure-tris-(carbo-trimethylcyclohexyloxy)-methylester, Trithio-phosphorsäure-S,S,S-tris-(carbo-i-octyloxy)-methylester, Trithiophosphorsäure-S,S,S-tris-(carbo-2-ethylhexyloxy)-methylester, Trithiophosphorsäure-S,S,S-tris-1-(carbo-hexyloxy)-ethylester, Trithiophosphorsäure-S,S,S-tris-1-(carbo-2-ethylhexyloxy)-ethalester, Trithio-phosphorsäure-S,S,S-tris-2-(carbo-2-ethylhexyloxy)-ethylester.

**X. Mercaptocarbonsäure-Ester:** Beispiele für diese Verbindungen sind:
Ester der Thioglycolsäure, Thioäpfelsäure, Mercaptopropionsäure, der Mercaptobenzoesäuren bzw. der Thiomilchsäure, Mercaptoethylstearat und - oleat, wie sie in den Patenten FR 2 459 816, EP0 090 748, FR 2 552 440, EP 0 365 483 beschrieben sind. Die gen. Mercaptocarbonsäure-Ester umfassen auch Polyolester bzw. deren Partialester, sowie davon abgeleitete Thioether.

**XI. Epoxidierte Fettsäureester und andere Epoxidverbindungen:** Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen können auch auf eine Alumosalz-Verbindung aufgebracht sein; siehe hierzu auch DE-A-4 031 818.

**XII. Antioxidantien:** Als solche kommen beispielsweise in Betracht:

1) Alkylierte Monophenole, z. B. 2,6-Di-tert-butyl-4-methylphenol, 2-tert-butyl-4,6-dimethylphenol, 2,6-Di-tert-butyl-4-ethylphenol, 2,6-Di-tert-butyl-4-n-butylphenol, 2,6-Di-tert—butyl-4-iso-butylphenol, 2,6-Di-cyclopentyl-4-methylphenol, 2-(alpha-Methylcyclohexyl)-4,6-dimethylphenol, 2,6-Di-octadecyl-4-methylphenol, 2,4,6-Tri-cyclohexylphenol, 2,6-Di—tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol, Dodecylphenol und Mischungen davon.

2) Alkylthiomethylphenole, z. B. 2,4-Di-octylthiomethyl-6-tert-butylphenol, 2,4-Di—octylthiomethyl-6-methylphenol, 2,4-Di-octylthiomethyl-6-ethylphenol, 2,6-Di-dodecylthiomethyl-4-nonylphenol.

3) Alkylierte Hydrochinone, z. B. 2,6-Di-tert-butyl-4-methoxyphenol, 2,5-Ditert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di—tert-butyl-4-hydroxyanisol, 3,5-Di-tert-butyl-4-hydroxyphenyl-stearat, Bis-(3,5-di-tert-butyl-4-hydroxyphenyl)adipat.

4) Hydroxylierte Thiodiphenylether, z. B. 2,2'-Thio-bis-(6-tert-butyl-4-methylphenol), 2,2'—Thio-bis-(4-octylphenol), 4,4'-Thio-bis-(6-tert-butyl-3-methylphenol), 4,4'—Thio-bis-(6-tert-butyl-2-methylphenol), 4,4'-Thio-bis-(3,6-di-sec.amylphenol), 4,4'-Bis-(2,6-dimethyl-4-hydroxyphenyl)-disulfid.

5) Alkyliden-Bisphenole, z. B. 2,2'-Methylen-bis-(6-tert-butyl-4-methylphenol), 2,2'—Methylen—bis-(6-tert-butyl-4-ethylphenol), 2,2'-Methylen-bis-[4-methyl-6-(alpha—methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(alphamethylbenzyl)-4-nonylphenol], 2,2'-Methylen-bis-[6-(alpha,alpha-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1, 1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

6) Benzylverbindungen, z. B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert—butyl-4-hydroxybenzyl-mercaptoacetat.

7) Hydroxybenzylierte Malonate, z. B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di—dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

8) Hydroxybenzyl-Aromaten, z. B. 1,3,5-Tris-(3,5-di-tert-butyl-4-hydroxybenzyl)-2,4,6-trimethylbenzol, 1,4-Bis-(3,5-di-tert-buty(-4-hydroxybenzyl)-2,3,5,6-tetramethylbenzol, 2,4,6-Tris-(3,5-di-tert-butyl-4-hydroxybenzyl)-phenol.

9) Triazinverbindungen, z. B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-ditert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

10) Phosphonate und Phosphonite, z. B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tertbutyl-4-hydroxy-3-methylbenzylphosphonat, Ca-Salz des 3,5-Di-tert-butyl-4-hydroxybenzyl-phosphonsäure-monoethyleste rs, Tetrakis-(2,4-di-tert-butylphenyl)-4,4'-biphenylen—diphosphonit, 6-Isooctyloxy-2,4,8,10-tetra-tert-butyl--12H-dibenz[d,g]-1,3,2-dioxaphosphocin, 6-Fluor-2,4,8,10-tetra-tert-butyl-12-methyl-dibenz[d,g]-1,3,2-dioxaphosphocin.

11) Acylaminophenole, z. B. 4-Hydroxy-laurinsäureanilid, 4-Hydroxystearinsäureanilid, N-(3,5-di-tert-butyl-4-hydroxyphenyl)-carbaminsäureoctylester.

12) Ester der beta-(3,5-Di-tert-butyl-4-hydroxyphenyl)-propionsäure mit einoder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris-(hydroxyethyl)-isocyanurat, N,N'—Bis-(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2]-octan.

13) Ester der beta-(5-tert-Butyl-4-hydroxy-3-methylphenyl)-propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.

14) Ester der beta-(3,5-Dicyclohexyl-4-hydroxyphenyl)-propionsäure mit einoder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.

15) Ester der 3,5-Di-tert-butyl-4-hydroxyphenylessigsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

16) Amide der beta-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

17) Vitamin E (Tocopherol) und Abkömmlinge.

Bevorzugt sind Antioxidantien der Gruppen 1-5, 10 und 12 insbesondere 2,2-Bis-(4-hydroxyphenyl)-propan, Ester der 3,5-Di-tert-butyl-4-hydroxyphenylpropionsäure mit Octanol, Octadecanol oder Pentaerythrit oder Tris-(2,4-ditertbutylphenyl)-phosphit.
Gegebenenfalls kann auch ein Gemisch von Antioxidantien unterschiedlicher Struktur eingesetzt werden.
Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

**XIII. UV-Absorber und Lichtschutzmittel:** Beispiele dafür sind:

1) 2-(2'-Hydroxyphenyl)-benztriazole, wie z. B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)-phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis--(alpha,alpha—dimethylbenzyl)-2'-hydroxyphenyl)-benztriazol, Mischung aus 2-(3'-tert-Butyl-2'-hydroxy-5'-(2-octyloxycarbonylethyt)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)--5-chlor-benztriazol, 2-(3'-tert-Butyl-2'-hydroxy-5'-(2-methoxycarbonylethyl)-phenyl)-benztriazol, 2-(3'-tert-Butyl-2'-hydroxy-5'-(2-octyloxycarbonylethyl)-phenyl)-benztriazol, 2-(3'-tert-Butyl-5'-[2-(2-ethylhexyloxy)carbonylethyl ]-2'hydroxyphenyl)-benztriazol, 2-(3'-Dodecyl-2'-hydroxy-5'—methylphenyl)-benztriazol, und 2-(3'-tert-Butyl-2'-hydroxy-5'-(2-isooctyloxycarbonylethyl)phenylbenztriazol, 2,2'-Methylen-bis[4-(1,1,3,3-tetramethylbutyl)-6-benztriazol-2-ylphenol]; Umesterungsprodukt von 2-[3'-tert-Butyl-5'-(2-methoxycarbonylethyl)-2'—hydroxy—phenyl]-benztriazol mit Polyethylenglycol 300;

$$[R-CH_2CH_2-COO-CH_2CH_2-]_2$$

mit R = 3'-tert-Butyl-4'-hydroxy-5'-2H-benzotriazol-2-yl-phenyl.

2) 2-Hydroxybenzophenone, wie z. B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

3) Ester von gegebenenfalls substituierten Benzoesäuren, wie z. B. 4-tert--Butyl—phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

4) Acrylate, wie z. B. alpha-Cyan-beta,beta-diphenylacrylsäure-ethylester bzw. -isooctylester, alpha-Carbomethoxy-zimtsäuremethylester, alpha-Cyanobeta-methyl-p-methoxy-zimtsäuremethylester bzw. -butylester, alpha-Carbomethoxy-p-methoxy-zimtsäure-methylester, N-(beta-Carbomethoxy-b-cyanovinyl)-2-methyl-indolin.

5) Nickelverbindungen, wie z. B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-ditert-butylbenzylphosphonsäure—monoalkylestern, wie vom Methyl- oder Ethylester, Nickelkomplexe von Ketoximen, wie von 2-Hydroxy-4-methyl-phenylundecylketoxim, Nickelkomplexe des 1-Phenyl-4-lauroyl-5-hydroxy-pyrazols, gegebenenfalls mit zusätzlichen Liganden.

6) Oxalsäurediamide, wie z. B. 4,4'-Di-octyloxy-oxanilid, 2,2'-Di-octyloxy-5,5'di-tert—butyl—oxanilid, 2,2'-Di-dodecyloxy-5,5'di-tert-butyl-oxanilid, 2-Ethoxy-2'ethyl—oxanilid, N,N'-Bis-(3-dimethylaminopropyl)-oxalamid, 2-Ethoxy-5-tertbutyl-2'-ethyloxanilid und dessen Gemisch mit 2-Ethoxy-2'-ethyl-5,4'-di-tert-butyloxanilid, Gemische von o- und p-Methoxy- sowie von o- und p-Ethoxy-disubstituierten Oxaniliden.

7) 2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy—propyloxy)phenyl]-4,6-bis(2,4-dimethylphenyl)-1,3,5-triazin.

**XIV. Treibmittel:** Treibmittel sind z. B. organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiele für Schlagzähmodifikatoren und Verarbeitungshilfen, Geliermittel, Antistatika, Biocide, Metalldesaktivatoren, optische Aufheller, Flammschutzmittel, Antifogging-agents sowie Kompatibilisatoren sind beschrieben in "Kunststoffadditive", R. Gächter/H. Müller, Carl Hanser Verlag, 3. Aufl., 1989, und im "Handbook of Polyvinyl Chloride Formulating" E. J. Wickson, J. Wiley & Sons, 1993, sowie in "Plastics Additives" G. Pritchard, Chapman & Hall, London, 1st Ed., 1998.

Schlagzähmodifikatoren sind ferner ausführlich beschrieben in "Impact Modifiers for PVC", J. T. Lutz/D. L. Dunkelberger, John Wiley & Sons, 1992.

Beispiele für die zu stabilisierenden PVC Materialien sind: Polymere des Vinylchlorides, Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate mit polymerisierbaren Verbindungen wie Acrylnitril, Vinylacetat oder ABS zu verstehen, wobei es sich um Suspensions-, Masse- oder Emulsionspolymerisate handeln kann. Bevorzugt

ist ein PVC-Homopolymer, auch in Kombination mit Polyacrylaten.
Ferner sind umfaßt die Pfropfpolymerisate von PVC mit EVA, ABS und MBS. Bevorzugte Substrate sind auch Mischungen der vorstehend genannten Homound Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.
Beispiele für solche Komponenten sind Zusammensetzungen aus (i) 20-80 Gew.-Teilen eines Vinylchlorid-Homopolymeren (PVC) und (ii) 80-20 Gew.-Teile mindestens eines thermoplastischen Copolymerisats auf der Basis von Styrol und Acrylnitril, insbesondere aus der Gruppe ABS, NBR, NAR, SAN und EVA. Die verwandten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitril-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht. Bevorzugt als Komponente sind in diesem Zusammenhang Polymerzusammensetzungen, die als Komponenten (i) und (ii) eine Mischung aus
25 - 75 Gew.-% PVC und 75 - 25 Gew.-% der genannten Copolymerisate enthalten. Beispiele für solche Zusammensetzungen sind: 25 - 50 Gew.-% PVC und
75 - 50 Gew.-% Copolymerisate bzw. 40 - 75 Gew.-% PVC und 60 - 25 Gew.-% Copolymerisate. Bevorzugte Copolymerisate sind ABS, SAN und modifiziertes EVA, insbesondere ABS. Besonders geeignet sind auch NBR, NAR und EVA. In der erfindungsgemäßen Zusammensetzung können eines oder mehrere der genannten Copolymerisate vorhanden sein. Von besonderer Bedeutung sind als Komponente Zusammensetzungen, die (i) 100 Gewichtsteile PVC, und (ii) 0 - 300 Gewichtsteile ABS und/oder mit SAN modifiziertes ABS und 0 - 80 Gewichtsteile der Copolymeren NBR, NAR und/oder EVA, insbesondere jedoch EVA.
Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z. B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z. B. Treibstoffreste, Lackanteile, Metallspuren und Initiatorreste.
Die erfindungsgemäße Stabilisierung ist besonders bei PVC-Formulierungen von Vorteil, wie sie für Rohre und Profile üblich sind. Die Stabilisierung kann ohne Schwermetallverbindungen (Sn-, Pb-, Cd-, Zn-Stabilisatoren) durchgeführt werden. Diese Eigenschaft bietet auf bestimmten Gebieten Vorteile, weil Schwermetalle - mit Ausnahme von allenfalls Zink - sowohl bei der Produktion als auch bei der Anwendung bestimmter PVC-Artikel aus ökologischen Gründen oft unerwünscht sind. Auch bereitet die Herstellung von Schwermetallstabilisatoren aus gewerbehygienischer Hinsicht oftmals Probleme. Ebenfalls ist die Verhüttung von schwermetallhaltigen Erzen sehr oft mit gravierenden Einflüssen auf die Umwelt verbunden, wobei Umwelt das Biosystem Mensch, Tier (Fisch), Pflanze, Luft und Boden mit einschließt. Aus diesen Gründen ist auch die Verbrennung bzw. Deponierung von schwermetallhaltigen Kunststoffen umstritten.
Die Erfindung betrifft auch ein Verfahren zur Stabilisierung von PVC dadurch gekennzeichnet, daß man diesem mindestens eine der oben erwähnten Stabilisatorkombinationen zufügt.

Zweckmäßig kann die Einarbeitung der Stabilisatoren nach folgenden Methoden erfolgen: als Emulsion oder Dispersion (Eine Möglichkeit ist z. B. die Form einer pastösen Mischung. Ein Vorteil der erfindungsgemäßen Kombination besteht bei dieser Darreichungsform in der Stabilität der Paste.); als Trockenmischung während des Vermischens von Zusatzkomponenten oder Polymermischungen; durch direktes Zugeben in die Verarbeitungsapparatur (z. B. Kalander, Mischer, Kneter, Extruder und dergleichen) oder als Lösung oder Schmelze.
Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatorkombination und gegebenenfalls weitere Zusätze mit dem PVC vermischt. Hierbei können die Stabilisatoren einzeln oder in Mischung zugegeben werden oder auch in Form sogenannter Masterbatches.
Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen oder Spinnen, ferner Extrusions-Blasen. Das stabilisierte PVC kann auch zu Schaumstoffen verarbeitet werden.
Ein erfindungsgemäß stabilisiertes Hart-PVC eignet sich z. B. besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushaltsgeräte). Bevorzugt sind PVC-Hartschaumstoff-Formkörper und PVC-Rohre wie für Trinkoder Abwasser, Druckrohre, Gasrohre, Kabelkanal- und Kabelschutzrohre, Rohre für Industrieleitungen, Sickerrohre, Abflußrohre, Dachrinnenrohre und Drainagerohre. Näheres hierzu siehe "Kunststoffhandbuch PVC", Band 2/2, W. Becker/H. Braun, 2. Aufl., 1985, Carl Hanser Verlag, Seiten 1236 - 1277.

Die Verbindungen der Formel I werden nach bekannten Methoden hergestellt, wie in dem folgenden Beispiel näher erläutert. Dabei, sowie im übrigen Text, beziehen sich Teile und Prozentangaben auf das Gewicht, sofern nicht anders angegeben.

**Beispiel 1:** Herstellung von 6-Amino-1,3-dimethyluracil

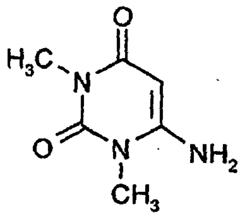

(Ia)

Unter Stickstoff werden

224,8 g N,N'-Dimethylharnstoff
238,7 g Cyanessigsäure und
310,9 g Essigsäureanhydrid

unter Rühren auf 80°C erwärmt. Es wird 2 Stunden bei 80°C gerührt und auf 50 mbar evakuiert, so dass die Essigsäure abdestilliert. Nach Abkühlen werden bei 35°C 250 g Eiswasser zugesetzt. Nach 10 Minuten Rühren werden unter Eiskühlung 567 g 15 %-ige Natronlauge zugetropft, wobei der pH bis zu 475 ml nicht über 7 ansteigt. Nach Überschreiten von pH 7 wird eine Veränderung des Niederschlags beobachtet, und die Mischung erwärmt sich von 23 auf ca. 50°C. Der pH beträgt nun 10,2. Nach Zusatz von 200 g Wasser wird 10 Minuten nachgerührt und zum Rückfluß erwärmt. Nach einer Stunde am Rückfluß wird ' auf 20°C gekühlt und abgenutscht. Der Filterkuchen wird zweimal mit je 100 g kaltem Wasser gewaschen und bei 90°C im Vakuumtrockenschrank getrocknet.
Ausbeute: 334 g (86,1 % der Theorie), Festpunkt: 282°C

**Beispiel I:** Statischer Hitzetest

Eine Trockenmischung bestehend aus den in den folgenden Rezepturen angegebenen Komponenten (vgl. Tabelle 1) wird auf einem Mischwalzwerk 5 Minuten bei 200°C gewalzt. Vom gebildeten Walzfell werden Testfolienstücke von 0,3 mm Dicke entnommen. Die Folienproben werden in einem Ofen bei 190°C thermisch belastet. Im zeitlichen Abstand von 3 Minuten wird der Yellowness Index (**YI**) nach ASTM D-1925-70 bestimmt. Die Ergebnisse sind der folgenden Tabelle 2 zu entnehmen. Geringe **YI**-Werte bedeuten gute Stabilisierung.

| | | |
|---|---|---|
| Rezeptur: | Norvinyl S 6775 | 100,0 Teile |
| | Omyalite 95 T | 2,0 Teile |
| | 1,3-Di-methyl-6-aminouracil | 0,2 Teile |
| | Irgawax 367 | 0,7 Teile. |
| | Wax PE 520 | 0,6 Teile |
| | Wax AC 629 A | 0,2 Teile |
| | Ca-Stearat | 0,8 Teile |
| | Costab. I | kein / 0,4 Teile |
| | Costab. II | kein / 0,3 Teile |
| | Costab. III | kein / 1,0 Teile |
| | | |
| | Costab. I: Malbit CH 16385 | = Maltit |
| | Costab. II: Mark 6045 J | = 60 %ige $NaClO_4$-Lsg. absorbiert auf $CaSiO_3$-$CaCO_3$ |
| | Costab. III: | = Ca-Al-Hydroxid bzw. Aluminiumhydroxid |

Tabelle 1

| Rezeptur Nr. | Costab. I | Costab II | Costab III | Bemerkungen |
|---|---|---|---|---|
| 1 | - | - | - | Stand der Technik |
| 2 | - | - | A - 1[1)] | erfindungsgemäss |
| 3 | + | - | dito | dito |
| 4 | - | - | A - 2[2)] | dito |
| 5 | + | - | dito | dito |
| 6 | + | + | dito | dito |
| 7 | - | - | 512/138[3)] | dito |
| 8 | + | - | dito | dito |
| 9 | - | - | $Al(OH)_3$[4)] | dito |
| 10 | + | - | dito | dito |
| 11 | + | + | dito | dito |
| 12 | + | - | A - 3[5)] | dito |
| 13 | + | + | dito | dito |
| 14 | + | - | 1385/091/A[6)] | dito |
| 15 | + | + | dito | dito |
| 16 | + | - | 1385/093/A[7)] | dito |
| 17 | + | + | dito | dito |

1) Apyral C3AH6 - Katoit
2) Apyral 180: AlO(OH) - Böhmit
3) Ca-Al-Hydroxy-Hydrogenphosphit (ex DE 3 941 902, Beispiel 2 - jedoch kein Coating mit Na-Stearat)
4) ex Merck
5) Apyral 120: $Al(OH)_3$ - Hydrargillit (Gibbsit)
6) synthetischer Katoit (ex WO 93/25613, Beispiel 1)
7) synthetisches Hydrocalumit (ex WO 92/13914, Beispiel 1)

**Tabelle 2**

| Rezept | Minuten | | | | | | | | |
|---|---|---|---|---|---|---|---|---|---|
| Nr. | 0 | 3 | 6 | 9 | 12 | 15 | 18 | 21 | 24 |
| 1 | 64,7 | 71,4 | 102,1 | schwarz | - | - | - | - | - |
| 2 | 46,3 | 47,5 | 62,1 | 94,7 | schwarz | - | - | - | - |
| 3 | 28,0 | 29,9 | 32,6 | 41,4 | 51,3 | 70,6 | 112,5 | schwarz | - |
| 4 | 50,0 | 54,3 | 72,2 | 108,8 | schwarz | - | - | - | - |
| 5 | 40,0 | 40,6 | 41,9 | 44,6 | 51,5 | 77,6 | schwarz | - | - |
| 6 | 27,9 | 28,5 | 29,0 | 31,4 | 42,2 | 48,1 | 61,3 | 73,4 | 91,1[β)] |
| 7 | 50,4 | 57,0 | 75,6 | 111,5 | schwarz | - | - | - | - |
| 8 | 30,7 | 32,6 | 37,0 | 49,0 | 71,4 | 115,1 | schwarz | - | - |
| 9 | 39,0 | 50,4 | 80,1 | 91,5 | schwarz | - | - | - | - |
| 10 | 31,4 | 33,1 | 39,5 | 52,9 | 89,6 | schwarz | - | - | - |

| Rezept | Minuten | | | | | | | | |
|---|---|---|---|---|---|---|---|---|---|
| Nr. | 0 | 3 | 6 | 9 | 12 | 15 | 18 | 21 | 24 |
| 11 | 27,9 | 28,2 | 32,2 | 44,1 | 52,4 | 62,1 | 74,5 | 93,1 | 120,0[α)] |
| 12 | 35,8 | 35,8 | 36,5 | 39,4 | 55,8 | 80,6 | 102,7 | schwarz | - |
| 13 | 27,9 | 29,6 | 29,8 | 31,2 | 37,4 | 42,5 | 53,0 | 67,1 | 79,3[β)] |
| 14 | 35,0 | 35,5 | 36,1 | 37,6 | 43,2 | 62,0 | schwarz | - | - |
| 15 | 28,2 | 28,5 | 29,6 | 32,6 | 41,4 | 46,0 | 57,8 | 71,1 | 89,5[β)] |
| 16 | 32,9 | 34,2 | 35,1 | 37,4 | 41,2 | 51,2 | 79,8 | schwarz | - |
| 17 | 27,6 | 28,6 | 28,6 | 29,6 | 37,0 | 47,9 | 51,7 | 67,2 | 84,5[β)] |

α) langsamer Farbumschlag nach braun innerhalb von 48 Minuten

β) langsamer Farbumschlag nach braun innerhalb von 93 Minuten

Der Versuch zeigt deutlich, dass die erfindungsgemässen Stabilisatorkombinationen sowohl in der Anfangsfarbe und Farbhaltung (Mittelfarbe) - Messwerte **YI** - als auch in der Langzeitstabilität - Messwert: Zeit bis zur Schwärzung - verbessert sind gegenüber dem Stand der Technik.

**Patentansprüche**

**1.** Stabilisatorkombination enthaltend

A) mindestens eine Verbindung der Formel I

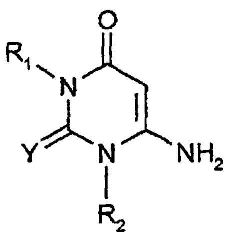 (I),

worin $R_1$ und $R_2$ unabhängig voneinander für $C_1$-$C_{12}$-Alkyl, $C_3$-$C_6$-Alkenyl, unsubstituiertes oder mit 1 bis 3 $C_1$-$C_4$-Alkyl-, $C_1$-$C_4$-Alkoxy-, $C_5$-$C_8$-Cycloalkyl- oder mit Hydroxygruppen oder Cl-Atomen substituiertes $C_5$-$C_8$-Cycloalkyl, unsubstituiertes oder am Phenylring mit 1 bis 3 $C_1$-$C_4$-Alkyl-, $C_1$-$C_4$-Alkoxy-,

$C_5$-$C_8$-Cycloalkyl- oder mit Hydroxygruppen oder Cl-Atomen substituiertes $C_7$-$C_9$-Phenylalkyl darstellen, und

$R_1$ oder $R_2$ zusätzlich für Wasserstoff stehen können, sowie

Y S oder O ist, und

B) mindestens eine Verbindung aus der Gruppe der Calcium-Aluminium-Hydroxide und/oder deren Hydrate und/oder

C) mindestens eine Verbindung aus der Gruppe der Calcium-Aluminium-Hydrogenphosphite und/oder deren Hydrate und/oder

D) mindestens eine Verbindung aus der Gruppe der Aluminiumhydroxide und/oder deren Hydrate und/oder

E) mindestens eine Verbindung aus der Gruppe der Calcium-Aluminium-Hydroxo-(Hydrogen)Carbonate und/oder deren Hydrate und/oder

F) mindestens eine Verbindung aus der Gruppe der Lithium-Schichtgitterverbindungen und/oder deren Hydrate und/oder

G) mindestens eine Verbindung aus der Gruppe der titanhaltigen Hydrotalcite und/oder deren Hydrate.

**2.** Stabilisatorkombination gemäss Anspruch **1**, wobei die Komponente B) eine Verbindung aus der Gruppe der Hydrocalumite der allgemeinen Formel

$$Ca_xAl(OH)_{2x+3}\cdot mH_2O,$$

wobei
x = 1 - 4 und
m = 0 - 8 bedeuten, ist.

**3.** Stabilisatorkombination gemäss Anspruch **1**, wobei die Komponente C) eine Verbindung aus der Gruppe der Calcium-Aluminium-Hydroxo-Hydrogenphosphite der allgemeinen Formel

$$Ca_xAl_2(OH)_{2(x+2)}HPO_3\cdot mH_2O,$$

wobei
x = 2 - 8 und
m = 0 - 12 bedeuten, ist.

**4.** Stabilisatorkombination gemäss Anspruch **1**, wobei die Komponente F) eine Verbindung aus der Gruppe der Lithium-Aluminium-Schichtgitterverbindungen der allgemeinen Formel A

$$Li_aM^{II}_{(b-2a)}Al_{(2+a)}OH_{(4+2b)}A^{n-}_{2/n}\cdot mH_2O$$

worin
$M^{II}$ Mg, Ca oder Zn und
$A^{n-}$ ein ausgewähltes Anion der Wertigkeit n oder ein Gemisch von Anionen ist und die Indizes im Bereich von

$$0 < a < (b-2)/2,$$

$$1 < b < 6$$

und
m = 0 bis 30
liegen mit der Einschränkung, dass b-2a > 2 ist oder
der allgemeinen Formel B

$$[Al_2(Li_{(1-x)} \bullet M^{II}_x)(OH)_6]_n(A^{n-})_{1+x} \bullet mH_2O$$

worin
$M^{II}$, A, m und n die obige Bedeutung haben und
x die Bedingung erfüllt $0{,}01 \leq x < 1$, ist.

**5.** Stabilisatorkombination gemäß Anspruch **1**, wobei die Komponente G) ein titanhaltiger Hydrotalcit der Formel $Al_aMg_bTi_c(OH)_d(CO_3)_e \cdot mH_2O$ ist mit a:b = 1:1 bis 1:10; 2≤b≤10; 0<c<5; 0≤m<5 betragen und d und e so gewählt sind, daß ein basisches ladungsfreies Molekül entsteht.

**6.** Stabilisatorkombination gemäss Anspruch 1, wobei die Verbindung der Komponente A) in der Verbindung der Formel I
6-Amino-1,3-dimethyl-uracil, 6-Amino-1,3-di-n-propyl-uracil,
6-Amino-1,3-di-n-butyl-uracil, 6-Amino-1,3-di-ethyl-thiouracil oder
6-Amino-1,3-di-n-butyl-thiouracil ist.

**7.** Stabilisatorkombination gemäss Ansprüchen 1 bis 6, die zusätzlich mindestens einen epoxidierten Fettsäureester enthält und/oder gegebenenfalls eine Perchloratverbindung und/oder gegebenenfalls zusätzlich Zink- und/oder Alkali- und/oder Erdalkalicarboxylate oder Aluminiumcarboxylate und/oder gegebenenfalls mindestens einen weiteren Stoff aus den Gruppen der Phosphite, Antioxidantien, beta-Dicarbonylverbindungen, Weichmacher, Füllstoffe, Gleitmittel oder Pigmente enthält.

**8.** Stabilisatorkombination gemäss Ansprüchen 2 bis 4 enthaltend zusätzlich ein Polyol und/oder einen Disaccharidalkohol und/oder gegebenenfalls eine Glycidylverbindung und/oder gegebenenfalls eine Perchloratverbindung.

**9.** Zusammensetzung enthaltend eine chlorhaltiges Polymer und mindestens eine Stabilisatorkombination gemäss den Ansprüchen 1 bis 8.

**10.** Zusammensetzung gemäss Anspruch 9 zur Herstellung von PVC- Rohren oder PVC-Profilen.

## Claims

**1.** A stabilizer combination comprising

A) at least one compound of the formula I

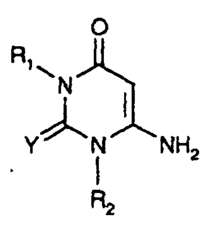

(I),

in which
$R_1$ and $R_2$ independently of one another are $C_1$-$C_{12}$-alkyl, $C_3$-$C_6$-alkenyl, $C_5$-$C_8$-cycloalkyl which is unsubstituted or substituted by 1 to 3 $C_1$-$C_4$-alkyl-, $C_1$-$C_4$-alkoxy-, $C_5$-$C_8$-cycloalkyl or hydroxyl groups or chlorine atoms, or are $C_7$-$C_9$-phenylalkyl which is unsubstituted or substituted on the phenyl ring by 1 to 3 $C_1$-$C_4$-alkyl, $C_1$-$C_4$-alkoxy, $C_5$-$C_8$-cycloalkyl or hydroxyl groups or chlorine atoms, and
$R_1$ and $R_2$ can additionally be hydrogen, and
Y is S or O, and
B) at least one compound from the group of the calcium aluminum hydroxides and/or their hydrates and/or
C) at least one compound from the group of the calcium aluminum hydrogen phosphites and/or their hydrates and/or
D) at least one compound of the group of the aluminum hydroxides and/or their hydrates and/or
E) at least one compound from the group of the calcium aluminum hydroxo (hydrogen) carbonates and/or their hydrates and/or
F) at least one compound from the group of the lithium layered lattice compounds and/or their hydrates and/or
G) at least one compound from the group of the titanium-containing hydrotalcites and/or their hydrates.

**2.** The stabilizer combination as claimed in claim 1, in which component B) is a compound from the group of hydrocalumites of the general formula

$$Ca_xAl(OH)_{2x+3}\cdot mH_2O,$$

where
x = 1 - 4 and
m = 0 - 8.

**3.** The stabilizer combination as claimed in claim **1**, in which component C) is a compound from the group of calcium aluminum hydroxo hydrogen phosphites of the general formula

$$Ca_xAl_2(OH)_{2(x+2)}HPO_3\cdot mH_2O,$$

where
x = 2 - 8 and
m = 0 - 12.

**4.** The stabilizer combination as claimed in claim 1, in which component F) is a compound from the group of lithium aluminum layered lattice compounds of the general formula A

$$Li_aM^{II}_{(b-2a)}Al_{(2+a)}OH_{(4+2b)}A^{n-}_{2/n}\cdot mH_2O$$

in which
$M^{II}$ is Mg, Ca or Zn and
$A^{n-}$ is a selected anion of valency n or a mixture of anions, and the indices lie in the range

$$0 < a < (b-2)/2,$$

$$1 < b < 6$$

and
m = 0 to 30
with the proviso that b-2a > 2,
or have the general formula B

$$[Al_2(Li_{(1-x)}\cdot M^{II}_x)(OH)_6]_n(A^{n-})_{1+x}\cdot mH_2O$$

in which
$M^{II}$, A, m and n are as defined above and
for x the condition $0.01 \leq x < 1$ is met.

**5.** The stabilizer combination as claimed in claim **1,** in which component G) is a titanium-containing hydrotalcite of the formula $Al_aMg_bTi_c(OH)_d(CO_3)_e \cdot mH_2O$ where a:b = 1:1 to 1:10; 2·b·10; 0<c<5; 0·m<5 and d and e are chosen such that a basic, charge-free molecule is formed.

**6.** The stabilizer combination as claimed in claim **1,** in which the compound of component A) in the compound of the formula I is 6-amino-1,3-dimethyluracil, 6-amino-1,3-di-n-propyluracil, 6-amino-1,3-di-n-butyluracil, 6-amino-1,3-diethylthiouracil or 6-amino-1,3-di-n-butylthiouracil.

**7.** The stabilizer combination as claimed in any of claims **1** to **6,** which additionally comprises at least one epoxidized fatty acid ester and/or optionally a perchlorate compound and/or optionally additionally comprises zinc carboxylates and/or alkali metal carboxylates and/or alkaline earth metal carboxylates or aluminum carboxylates and/or optionally comprises at least one further substance from the group of phosphites, antioxidants, betadicarbonyl compounds, plasticizers, fillers, lubricants or pigments.

**8.** The stabilizer combination as claimed in any of claims **2** to **4,** additionally comprising a polyol and/or a disaccharide alcohol and/or optionally a glycidyl compound and/or optionally a perchlorate compound.

**9.** The composition comprising a chlorine-containing polymer and at least one stabilizer combination as claimed in any of claims **1** to **8**.

**10.** The composition as claimed in claim **9** for producing PVC pipes or PVC profiles.

**Revendications**

**1.** Combinaison de stabilisateur contenant

A) au moins un composé de formule I

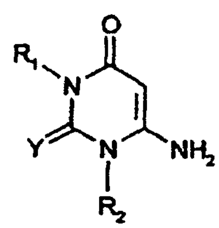

(I),

dans laquelle $R_1$ et $R_2$ représentent, indépendamment l'un de l'autre, un alkyle en $C_1$ à $C_{12}$, un alcényle en $C_3$ à $C_6$, un cycloalkyle en $C_5$ à $C_8$, non substitué ou substitué par un à trois groupements alkyle en $C_1$ à $C_4$, alcoxy en $C_1$ à $C_4$, cycloalkyle en $C_5$ à $C_8$ ou par des groupements hydroxy ou des atomes de chlore, un phénylalkyle en $C_7$ à $C_9$, non substitué ou substitué sur le cycle phényle par un à trois groupements alkyle en $C_1$ à $C_4$, alcoxy en $C_1$ à $C_4$, cycloalkyle en $C_5$ à $C_8$ ou par des groupements hydroxy ou des atomes de chlore et $R_1$ ou $R_2$ peuvent en outre représenter de l'hydrogène et
Y représente S ou O et
B) au moins un composé du groupe des hydroxydes de calcium et d'aluminium et/ou leurs hydrates et/ou
C) au moins un composé du groupe des hydrogénophosphites de calcium et d'aluminium et/ou leurs hydrates et/ou
D) au moins un composé du groupe des hydroxydes d'aluminium et/ou leurs hydrates et/ou
E) au moins un composé du groupe des hydroxo(hydrogéno)carbonates de calcium et d'aluminium et/ou leurs

hydrates et/ou
F) au moins un composé du groupe des composés à réseau à couches du lithium et/ou leurs hydrates et/ou
G) au moins un composé du groupe des hydrotalcites contenant du titane et/ou leurs hydrates.

**2.** Combinaison de stabilisateur selon la revendication 1, le composant B) étant un composé du groupe des hydrocalumites de formule générale

$$Ca_xAl\ (OH)_{2x+3}.mH_2O,$$

où
x = 1 à 4 et
m = 0 à 8.

**3.** Combinaison de stabilisateur selon la revendication 1, le composant C) étant un composé du groupe des hydroxo-hydrogénophosphites de calcium et d'aluminium de formule générale

$$Ca_xAl_2(OH)_{2(x+2)}HPO_3.mH_2O,$$

où
x = 2 à 8 et
m = 0 à 12.

**4.** Combinaison de stabilisateur selon la revendication 1, le composant F) étant un composé du groupe des composés à réseau à couches de lithium et d'aluminium de formule générale A

$$Li_aM^{II}_{(b-2a)}Al_{(2+a)}OH_{(4+2b)}A^{n-}_{2/n}.mH_2O$$

dans laquelle
$M^{II}$ représente Mg, Ca ou Zn et
$A^{n-}$ représente un anion choisi de valence n ou un mélange d'anions et les indices se trouvent dans la plage de

$$0 < a < (b-2)/2,$$

$$1 < b < 6$$

et
m = 0 à 30
avec comme limite que b-2a > 2 ou
de formule générale B

$$[Al_2(Li_{(1-x)}.M^{II}_x)\ (OH)_6]_n(A^{n-})_{1+x}.mH_2O$$

dans laquelle
$M^{II}$, A, m et n ont la signification ci-dessus et x remplit la condition $0,01 \leq x < 1$.

**5.** Combinaison de stabilisateur selon la revendication 1, le composant G) étant un hydrotalcite contenant du titane de formule $Al_aMg_bTi_c(OH)_d(CO_3)_e.mH_2O$ avec a:b = 1:1 à 1:10 ; $2 \leq b \leq 10$ ; $0 < c < 5$ ; $0 \leq m < 5$ et d et e étant choisis de telle manière qu'il se forme une molécule basique sans charge.

**6.** Combinaison de stabilisateur selon la revendication 1, le composé du composant A) dans le composé de formule I étant le 6-amino-1,3-diméthyluracile, le 6-amino-1,3-di-n-propyluracile, le 6-amino-1,3-di-n-butyluracile, le 6-amino-1,3-di-éthylthiouracile, ou le 6-amino-1,3-di-n-butylthiouracile.

7. Combinaison de stabilisateur selon les revendications 1 à 6, qui contient en outre au moins un ester époxydé d'acide gras et/ou le cas échéant un composé perchlorate et/ou le cas échéant des carboxylates supplémentaires de zinc et/ou alcalins et/ou alcalino-terreux ou des carboxylates d'aluminium et/ou le cas échéant au moins une autre substance des groupes des phosphites, antioxydants, composés bêtadicarbonyle, plastifiants, charges, lubrifiants ou pigments.

8. Combinaison de stabilisateur selon les revendications 2 à 4, contenant en outre un polyol et/ou un alcool de disaccharide et/ou le cas échéant un composé glycidyle et/ou le cas échéant un composé perchlorate.

9. Composition contenant un polymère chloré et au moins une combinaison de stabilisateur selon les revendications 1 à 8.

10. Composition selon la revendication 9 pour la préparation de tuyaux en PVC ou de profilés en PVC.